# EUROPÄISCHE PATENTSCHRIFT

(11) **EP 0 485 439 B1**
(45) Veröffentlichungstag und Bekanntmachung des Hinweises auf die Patenterteilung: **22.06.1994**
(21) Anmeldenummer: 90911568.5
(22) Anmeldetag: 23.07.1990
(51) Int. Cl.: B62B 3/02

(54) **GERÄTEWAGEN**
EQUIPMENT TROLLEY
CHARIOT A USTENSILES

(30) Priorität: 31.07.1989 DE 8909255 U
(43) Veröffentlichungstag der Anmeldung: 20.05.1992
(73) Patentinhaber: Floordress Reinigungsgeräte GmbH, D-73547 Lorch (DE)
(72) Erfinder: SCHUNTER, Roland, D-7073 Lorch-Waldhausen (DE)
(74) Vertreter: Wilk, Hans-Christof, Dr.
(86) Internationale Anmeldenummer: EP9001208
(87) Internationale Veröffentlichungsnummer: WO9101909

(56) Entgegenhaltungen:
- FR-A- 2 349 484
- GB-A- 933 546
- LU-A- 0 086 310
- US-A- 4 549 748

## Beschreibung

Die Erfindung richtet sich auf einen Handwagen bestehend aus einem mit Rädern versehenen Gestell, das mit einer unteren Bodenwanne und einer oberen Ablage versehen ist, wobei das Gestell aus sich kreuzenden und gelenkig miteinander verbundenen Rahmen gebildet ist, wodurch der Gerätewagen bei Nichtgebrauch zusammenklappbar ist, sowie die Bodenwanne mittels Verschlüssen an zwei gegenüberliegenden Seiten in horizontale Streben des Gestells eingehängt ist.

Ein derartiger Handwagen ist aus der GB-A-933,546 bekannt. Bei diesem vorbekannten Handwagen ist die Bodenwanne mittels bogenförmiger Bohrungen und diese umschließender Schellen an Streben eingehängt und festgelegt. An einer Seite sind die Schellen zu verschwenken, so daß anschließend die entsprechenden Bohrungen von den Streben zu entfernen sind und damit die Bodenwanne an einer Seite von den Streben lösbar ist. Das Öffnen bzw Verschwenken der mit geringem Abstand über der Standfläche des Handwagens angeordneten Schellen ist für die ausführende Person mit Verletzungsgefahr verbunden. Außerdem stellen diese Schellen ein zusätzliches Bauteil dar. Für den Einsatz als Gerätewagen für Reinigungszwecke, in welchen beispielsweise ein Abfallsack einzuhängen ist, ist dieser bekannte Handwagen nicht geeignet, da er sowohl oben als auch unten eine Ablage mit Bodenfläche aufweist.

Bei Gerätewagen für Reinigungszwecke, bestehend aus einem mit Rädern versehenen Gestell, das mit einer unteren Bodenwanne und einem oberen Rahmen zur Halterung zum Beispiel eines Abfallsackes versehen ist, wobei das Gestell aus sich kreuzenden und gelenkig miteinander verbundenen Rahmen gebildet ist, wodurch der Gerätewagen bei Nichtgebrauch zusammenklappbar ist, mußte bisher, wenn der Gerätewagen nach dem Gebrauch aus Platzgründen zusammengeklappt werden sollte, der Boden herausgenommen und getrennt vom Gerätewagen aufbewahrt werden. Dies hatte zur Folge, daß die Bodenwanne an anderer Stelle aufbewahrt wurde, so daß sie, wenn der Gerätewagen wieder in Betrieb genommen wurde, häufig nicht oder nicht gleich zur Hand war.

Aus der FR-A-2349484 ist ein Einkaufswagen mit aufklappbarem Kindersitz bekannt, bei welchem der Kindersitz mit einem Schnappverschluß an einem Strebenelement des Einkaufswagens verschwenkbar befestigt ist. Von diesem Schnappverschluß soll der Kindersitz aber nicht wieder gelöst werden.

Aufgabe der Erfindung ist es, einen gattungsgemäßen Handwagen für die Nutzung als Gerätewagen weiterzuentwickeln und mit einfacher zu bedienenden und weniger verletzungsträchtigen Verschlüssen an der Bodenwanne zu versehen.

Die Aufgabe wird gemäß der Erfindung dadurch gelöst, daß der Handwagen zur Ausbildung als Gerätewagen für Reinigungszwecke eine als Rahmen zur Halterung eines Abfallsackes ausgebildete obere Ablage aufweist und die Bodenwanne mittels Schnappverschlüssen formschlüssig aber lösbar eingehängt ist, wozu die Bodenwanne an ihren beiden mit den horizontalen Streben des Gestelles zu verbindenden Seiten mit dem Durchmesser der horizontalen Streben entsprechenden Bohrungen versehen ist, und jeder Bohrung in Richtung auf die zugehörige horizontale Strebe ein verengter Spalt vorgeschaltet ist, dessen lichte Weite geringer ist als der Durchmesser der horizontalen Streben, so daß die Bodenwanne unter Kraftanwendung auf die horizontalen Streben aufdrückbar und unter Kraftanwendung von diesen wieder lösbar ist.

Die Erfindung schlägt demnach vor, die Bodenwanne an zwei gegenüberliegenden Seiten in horizontale Streben des Gestelles formschlüssig aber lösbar einzuhängen, so daß zwischen der Bodenwanne und den horizontalen Streben des Gestelles Schnappverschlüsse gebildet werden. Die Bodenwanne weist hierzu wenigstens an den beiden Seiten, an denen die Verbindung mit den Streben des Gestelles erfolgen soll, einen Rand auf, der im Schnitt zum Beispiel U-förmig ausgebildet und nach unten offen ist, wobei in den Seitenwänden dieses Randes Bohrungen ausgebildet sind, deren Durchmesser dem Außendurchmesser der Streben entspricht, wobei jeder Bohrung ein verengter Einführspalt vorgeschaltet ist, dessen lichte Weite kleiner ist als der Durchmesser der Streben des Gestelles, so daß die Ränder der Bodenwanne unter Kraftanwendung über die Streben gedrückt werden, bis die letzteren in die vorgenannten Bohrungen eingerastet sind.

Eine beispielsweise Ausführungsform der Neuerung wird nachstehend anhand der Zeichnung beschrieben, in der
- Figur 1: in Schrägansicht einen neuerungsgemäßen Gerätewagen zeigt.
- Figur 2: zeigt im Detail die Randausbildung der Bodenwanne in der eingerasteten Stellung.

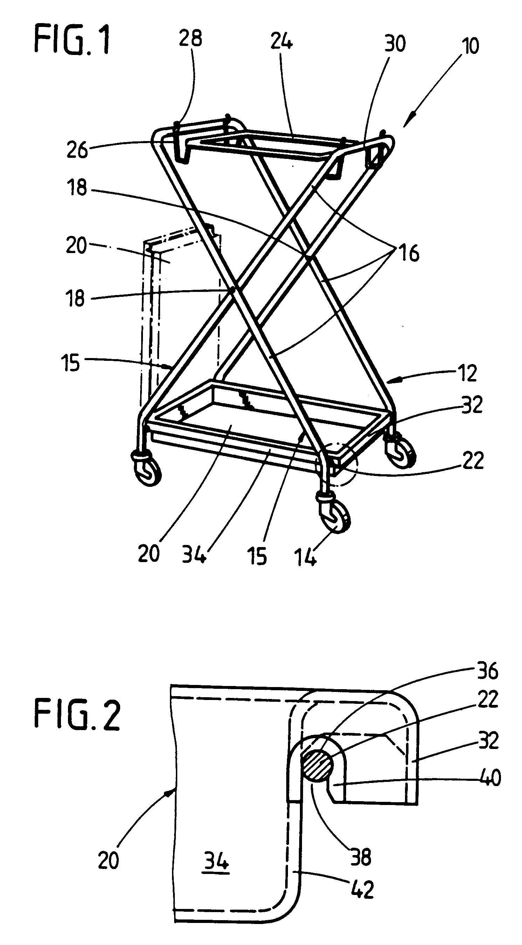

Figur 1 zeigt in Schrägansicht einen Gerätewagen 10, bestehend aus einem Gestell 12 mit vier Rädern 14. Das Gestell 12 wird durch zwei etwa U-förmige Rohr-Rahmen gebildet, wobei an den freien Schenkeln jedes U-förmigen Rahmens je ein Rad 14 angebracht ist. Die beiden Rahmen 15 überkreuzen sich und ihre jeweiligen Schenkel 16 sind gelenkig miteinander verbunden, beispielsweise mittels jeweils eines Gelenkzapfens 18.

Die Schenkel 16 jedes Rahmens 15 sind knapp oberhalb der Räder 14 durch jeweils eine praktisch horizontale Strebe 22 verbunden. In die beiden Streben ist eine Bodenwanne 20 eingehängt. An den oberen horizontalen Teilen 30 der beiden Rahmen 15 sind Haken 28 angebracht, in die mittels Bügeln 26 ein praktisch horizontaler Rahmen 24 eingehängt ist, in den beispielsweise ein nicht dargestellter Abfallsack einhängbar ist, der in der Bodenwanne 20 aufliegen kann. Die Bodenwanne 20 ist in der dargestellten Ausführungsform mit einem umlaufenden Rand 32 versehen, der, wie Figur 2 zeigt, im Querschnitt U-förmig ausgebildet und nach unten offen ist. Die Bodenwanne 20 ist an ihren schmalen Stirnseiten in die Streben 22 des Gestelles eingehängt.

Zu diesem Zweck sind in den längsverlaufenden Seitenwänden 34 des Randes und außerhalb der vertikalen Stirnwände 42 der Bodenwanne 20 Bohrungen 36 ausgebildet, deren Durchmesser gleich oder etwas größer als der Außendurchmesser der Streben 22 ist. Unterhalb der Bohrungen 22 ist ein Schlitz oder Spalt 38 ausgebildet, der von unten her zu den Bohrungen 22 führt, dessen lichte Weite aber geringer ist als der Durchmesser der Bohrungen 36 und damit auch als der Durchmesser der Streben 22.

Die Bohrungen 22 können, wie erläutert, nur an den Seitenwänden 34 ausgebildet sein, es kann aber auch vorgesehen sein, daß an jede der Stirnwände 42 der Bodenwanne 20 eine nach unten offene U-förmige Rippe 40 angeformt ist, die dann in ihrem oberen Teil kreisförmig erweitert ist unter Bildung der Bohrung 36, und die in ihrem unteren Teil verengt ist unter Bildung des Spaltes 38, dessen Öffnungsbreite, wie gesagt, geringer ist als der Durchmesser der Streben 22. Wenn nun die Bodenwanne 20 eingesetzt wird, so wird sie unter Kraftanwendung auf die Streben 22 aufgedrückt, das heißt an beiden Querseiten der Bodenwanne 20 wird der verengte Spalt 38 über die jeweilige Strebe 22 gedrückt, bis die letztere in die jeweilige Bohrung 36 einrastet. Die Bodenwanne besteht aus einem hierfür geeigneten Kunststoff, der ausreichend elastisch verformbar ist.

Wenn nun nach Gebrauch der Gerätewagen zusammengeklappt werden soll, so wird die Bodenwanne an einer Seite wiederum unter Kraftanwendung von der Strebe 22 gelöst, das heißt nach oben von der Strebe 22 abgezogen und um die andere Strebe geschwenkt, z.B. in die in Figur 1 strichpunktiert gezeigte Position. Nach Aushängen des horizontalen Rahmens 24 aus dem Haken 28 auf einer Seite kann dann das Gestell um die Gelenkzapfen 18 geschwenkt und zusammengeklappt werden. Wichtig und von Vorteil hierbei ist, daß die Bodenwanne 20 nicht vollständig von dem Gerätewagen 10 gelöst wird, sondern auf einer Seite noch mit diesem verbunden bleibt, da die Bodenwanne 20, wie vorstehend beschrieben, nicht ohne Kraftanwendung von der anderen Strebe 22 gelöst werden kann. Zur Inbetriebnahme wird der Gerätewagen aufgeklappt und die Bodenwanne auf der freiliegenden Seite wieder über die zugehörige Strebe 22 gedrückt, bis die letztere in die zugehörige Bohrung 36 eingerastet ist.

## Patentansprüche

1. Handwagen bestehend aus einem mit Rädern (14) versehenen Gestell (12), das mit einer unteren Bodenwanne (20) und mit einer oberen Ablage versehen ist, wobei das Gestell (12) aus sich kreuzenden und geklenkig miteinander verbundenen Rahmen (15) gebildet ist, wodurch der Handwagen bei Nichtgebrauch zusammenklappbar ist, sowie die Bodenwanne (20) mittels Verschlüssen an zwei gegenüberliegenden Seiten in horizontale Streben (22) des Gestelles (12) eingehängt ist,
dadurch gekennzeichnet,
daß der Handwagen zur Ausbildung als Gerätewagen (10) für Reinigungszwecke eine als Rahmen (24) zur Halterung eines Abfallsackes ausgebildete obere Ablage aufweist und die Bodenwanne (20) mittels Schnappverschlüssen formschlüssig aber lösbar eingehängt ist, wozu die Bodenwanne (20) an ihren beiden mit den horizontalen Streben (22) des Gestelles (12) zu verbindenden Seiten mit dem Durchmesser der horizontalen Streben (22) entsprechenden Bohrungen (36) versehen ist, und jeder Bohrung (36) in Richtung auf die zugehörige horizontale Strebe (22) ein verengter Spalt (38) vorgeschaltet ist, dessen lichte Weite geringer ist als der Durchmesser der horizontalen Streben (22), so daß die Bodenwanne (20) unter Kraftanwendung auf die horizontalen Streben (22) aufdrückbar und unter Kraftanwendung von diesen wieder lösbar ist.

## Claims

1. Hand trolley consisting of a framework (12), which is provided with wheels (14), a lower base trough (20) and an upper deposit surface, wherein the framework (12) is formed of mutually crossing and articulatedly interconnected frames (15), whereby the hand trolley is collapsible when not in use, as well as the base trough (20) is hooked by means of fasteners into horizontal stays (22) of the framework (12) at two mutually opposite sides, characterised thereby, that the hand trolley for construction as equipment trolley (10) for cleaning purposes displays an upper deposit surface constructed as a frame (24) for the retention of a refuse bag and the base trough (20) is hooked in by means of snap fasteners in shape-locking, but detachable manner, for which purpose the base trough (20) is provided with bores (36), which correspond in diameter with the horizontal stays (22), at both its sides to be connected with the horizontal stays (22) of the framework (12), and a constricted gap (38), the clear width of which is less than the diameter of the horizontal stays (22), is set in front of each bore (36) in the direction of the associated horizontal stay (22) so that the base trough (20) is urgeable onto the horizontal stays (22) by the application of force and again detachable from these by the application of force.

## Revendications

1. Chariot à main constitué par un châssis (12) pourvu de roues (14) et comportant un bac de fond (20) inférieur, ainsi qu'un support supérieur, ce châssis (12) étant constitué par des cadres (15) qui se croisent et sont reliés par une liaison articulée, grâce à laquelle ce chariot à main peut être replié lorsqu'il n'est pas utilisé, et le bac de fond (20) étant accroché, au moyen de fermetures situées sur deux côtés opposés, sur des entretoises horizontales (22) du châssis (12), ce chariot à main étant caractérisé par le fait que, pour constituer un chariot d'outillage (10) servant pour des travaux de nettoyage, son support supérieur est constitué par un cadre (24) servant à fixer un sac à déchets et que son bac de fond (20) est fixé par un accrochage ferme mais amovible au moyen de fermetures à enclenchement, ce bac de fond (20) étant pourvu à cet effet, sur les deux de ses côtés qui seront emboîtés sur les entretoises horizontales (22) du châssis (12), de trous (36) de dimensions correspondantes au diamètre de ces entretoises horizontales (22), un fente (38) rétrécie précédant chaque trou (36) en direction de l'entretoise horizontale (22) sur laquelle elle doit s'emboîter, cette fente ayant une ouverture de largeur inférieure au diamètre des entretoises horizontales (22), ce qui fait que le bac de fond (20) peut être enclenché sur ces dernières (22) et en être déclenché en exerçant un effort dans les deux cas.
